# EUROPÄISCHE PATENTSCHRIFT

(11) **EP 4 387 875 B1**
(45) Veröffentlichungstag und Bekanntmachung des Hinweises auf die Patenterteilung: **25.02.2026**
(21) Anmeldenummer: 22758197.2
(22) Anmeldetag: 28.07.2022
(51) Int. Cl.: B60S 1/48, F16K 11/074

(54) **VERTEILUNGSEINRICHTUNG UND FLÜSSIGKEITSVERTEILUNGSAKTUATOR**
DISTRIBUTION DEVICE AND LIQUID DISTRIBUTION ACTUATOR
DISPOSITIF DE DISTRIBUTION ET ACTIONNEUR DE DISTRIBUTION DE LIQUIDE

(30) Priorität: 16.08.2021 DE 102021208936
(43) Veröffentlichungstag der Anmeldung: 26.06.2024
(73) Patentinhaber: Schaeffler Technologies AG & Co. KG, 91074 Herzogenaurach (DE)
(72) Erfinder: GOETZE, Wolf, 80687 München (DE); FISCHER, Matthias, 80687 München (DE); BARTHOLMAI, Bjoern, 80687 München (DE)
(74) Vertreter: Schaeffler Technologies
(86) Internationale Anmeldenummer: PCT/EP2022/071214
(87) Internationale Veröffentlichungsnummer: WO 2023/020804

(56) Entgegenhaltungen:
- WO-A1-2011/072809
- DE-A1- 102018 131 802
- DE-A1- 2 108 229
- DE-T5- 112016 005 328
- US-A1- 2015 158 058
- US-A1- 2019 277 412

## Beschreibung

Die Erfindung betrifft eine Verteilungseinrichtung für einen Flüssigkeitsverteilungsaktuator sowie einen Flüssigkeitsverteilungsaktuator mit einer solchen Verteilungseinrichtung.

Die Druckschrift DE 11 2016 005328 T5 offenbart eine gattungsgemäße Flüssigkeitsverteilungseinrichtung für Fahrzeugreinigungseinrichtungen.

Die Druckschrift US 2015/158058 A1 offenbart eine Verteilungseinrichtung wobei ein Rücklaufanschluss und eine Rücklaufpassage beschrieben sind.

Eine der Erfindung zugrunde liegende Aufgabe ist es, eine Wasserverteilung für eine Fahrzeugreinigung zu verbessern, und zwar im Hinblick auf die zunehmende Zahl von Fahrzeugsensoren.

Diese Aufgabe wird durch eine gemäß Anspruch 1 vorgeschlagene und unter Schutz gestellte Verteilungseinrichtung gelöst. Es wird ferner ein Flüssigkeitsverteilungsaktuator mit einer solchen Verteilungseinrichtung vorgeschlagen und unter Schutz gestellt (vgl. Anspruch 5). Des Weiteren werden eine Reinigungsvorrichtung sowie ein Fahrzeug vorgeschlagen und unter Schutz gestellt (vgl. Anspruch 6 und 7). Vorteilhafte Ausführungsformen der Erfindung sind Gegenstand der Unteransprüche.

Es wird eine Verteilungseinrichtung zur Versorgung einzelner Reinigungsstellen eines Fahrzeugs mit einer druckbeaufschlagten Flüssigkeit vorgeschlagen.

Die Verteilungseinrichtung weist dabei ein Gehäuse mit einem Zulaufanschluss, mehreren Ablaufanschlüssen für die einzelnen Reinigungsstellen und einem Rücklaufanschluss auf sowie einen darin angeordneten, elektromotorisch antreibbaren, drehbar verstellbaren Verteiler in Gestalt einer Scheibe, in welcher Flüssigkeitsaufnahme- und Flüssigkeitsführungsmittel ausgeformt sind. Der Verteiler ist dabei in definierte Positionen relativ zum Gehäuse drehbar verstellbar, um die Flüssigkeitsversorgung zu ermöglichen oder zu unterbinden.

Die Verteilerscheibe steuert bzw. führt dabei über ein stirnseitiges Flüssigkeitsaufnahme- und Flüssigkeitsführungsmittel in Gestalt einer Radialnut bzw. eines Radialkanals die Flüssigkeit zu den gewünschten Stellen der Verteilungseinrichtung.

Dieser vorgeschlagene Wasserverteilungsmechanismus vereinfacht eine Fahrzeugreinigungsvorrichtung bzw. ein Fahrzeugreinigungssystem und reduziert somit die damit verbundenen Kosten, weil sich durch ihn Flüssigkeitsförderpumpen sowie Ventilblöcke mit separat betätigbaren Ventilen einsparen lassen. Folglich geht damit auch eine Gewichtsersparnis einher. Indem Förderpumpen eingespart werden, vereinfacht sich auch eine entsprechende Pumpenansteuerung.

Zudem reduziert dieser vorgeschlagene Wasserverteilungsmechanismus einen Reinigungsflüssigkeitsverbrauch. Und dies wiederum äußert sich in einer Erhöhung einer Reichweite eines Fahrzeugs, die sich als solche mit einer Befüllung eines Reinigungsflüssigkeitsbehälters bzw. Tanks erreichen lässt. Insbesondere gilt dies für zukünftig vollautonom fahrende Fahrzeuge, die gegenüber bisherigen Fahrzeugen eine signifikant höhere Anzahl an Sensoren - einschließlich sicherheitsrelevanter Sensoren - aufweisen werden und deren Funktionsfähigkeit sichergestellt werden muss.

Ferner begünstigt die Einsparung von erforderlichen Vorrichtungs- bzw. Systemkomponenten auch eine entsprechende Kompaktheit einer solchen Vorrichtung bzw. eines solchen Systems, so dass insgesamt weniger Bauraum benötigt wird.

Unter einer Reinigungsstelle kann dabei eine einem Fahrzeugsensor zugeordnete Reinigungsstelle verstanden werden. Dabei muss diese Reinigungsstelle nicht selbst Teil des Sensors sein, sondern sie kann zu diesem beabstandet angeordnet sein, so zum Beispiel eine Stelle auf einer Windschutzscheibe und dergleichen mehr. Die Reinigungsstelle kann aber auch Teil eines Fahrzeugsensors sein, etwa eine einer Kamera zugeordnete Reinigungsstelle. Eine Reinigungsstelle kann aber auch eine andere Stelle des Fahrzeugs sein, die als solche keinem Fahrzeugsensor zugeordnet ist, beispielsweise eine weitere Stelle auf der besagten Windschutzscheibe, eine Stelle auf einem Scheinwerfer und dergleichen mehr.

Unter einer Flüssigkeit bzw. Reinigungsflüssigkeit kann dabei im einfachsten Fall Wasser verstanden werden, vorteilhafterweise jedoch eine wässrige Reinigungsmittellösung, d.h. Wasser in Verbindung mit einem Reinigungsmittelzusatz. Die Reinigungsmittellösung kann dabei zudem vorteilhafterweise ein Gefrier- bzw. Frostschutzmittel enthalten, welches als solches den Gefrierpunkt der Reinigungsmittellösung herabsetzt.

Der Verteiler der Verteilungseinrichtung ist dabei dichtungsfrei gegenüber dem Gehäuse der Verteilungseinrichtung ausgeführt. Daher wird vorgeschlagen, einen Flüssigkeitsrücklauf zu einem Tank vorzusehen. Zu diesem Zweck ist ein im Betrieb der Verteilungseinrichtung zwischen der Scheibe und dem Gehäuse von geförderter Flüssigkeit gefüllter, zusammenhängender Raum mit dem Rücklaufanschluss fluidisch verbunden.

Im Betrieb der Verteilungseinrichtung bildet die Scheibe stirnseitig mit dem jeweils zugeordneten Gehäuseteil bzw. Gehäuseabschnitt einen definierten Axialspalt aus, über welchen sich geförderte Flüssigkeit im Gehäuse ausbreitet und dabei stirnseitig einen Flüssigkeitsleckagefilm bzw. eine Flüssigkeitsleckageströmung bildet, welcher / welche den Verteiler vom Gehäuse beabstandet.

Es wird vorgeschlagen, die Verteilerscheibe bezüglich einer Achse orthogonal zur Längsachse der Verteilerscheibe symmetrisch bzw. spiegelsymmetrisch auszubilden, um ein hydrostatisches Gleichgewicht im Gehäuse bzw. am Verteiler bzw. der Verteilerscheibe erzeugen zu können.

Die Scheibe weist Druckausgleichsmittel in Gestalt von Durchgangslöchern auf.

Es wird ferner ein Flüssigkeitsverteilungsaktuator vorgeschlagen, welcher eine Verteilungseinrichtung bzw. Distributionseinrichtung der zuvor beschriebenen Art sowie einen Elektromotor zum Antrieb des drehbaren verstellbaren Verteilers der Verteilungseinrichtung umfasst.

Zudem wird eine Reinigungsvorrichtung bzw. ein Reinigungssystem für ein Fahrzeug zur Reinigung einer Vielzahl von Reinigungsstellen am Fahrzeug vorgeschlagen, wobei die Reinigungsvorrichtung bzw. das Reinigungssystem zumindest einen Flüssigkeitsverteilungsaktuator der zuvor beschriebenen Art umfasst.

Darüber hinaus wird auch ein Fahrzeug mit einer Reinigungsvorrichtung der zuvor beschriebenen Art vorgeschlagen.

Unter einem Fahrzeug ist dabei jede Art von Fahrzeug zu verstehen, welches entweder verbrennungsmotorisch und/oder elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: einen vorgeschlagenen Flüssigkeitsverteilungsaktuator in einer ersten perspektivischen Ansicht,
- Fig. 2: den in Fig. 1 gezeigten Aktuator in einer zweiten perspektivischen Ansicht,
- Fig. 3: den in Fig. 1 gezeigten Aktuator in einer dritten perspektivischen Ansicht,
- Fig. 4: den in Fig. 1 gezeigten Verteiler in einer perspektivischen Ansicht,
- Fig. 5: einen in Fig. 1 gezeigten ersten Gehäuseteil in einer perspektivischen Ansicht sowie
- Fig. 6: einen in Fig. 1 gezeigten zweiten Gehäuseteil in einer perspektivischen Ansicht,

Der vorgeschlagene Flüssigkeitsverteilungsaktuator A dient der Versorgung einzelner Reinigungsstellen (RS = Reinigungsstelle; RSᵢ, RSᵢ₊₁, ..., RSᵢ₊ₙ) eines Fahrzeugs mit einer druckbeaufschlagten Flüssigkeit bzw. Reinigungsflüssigkeit.

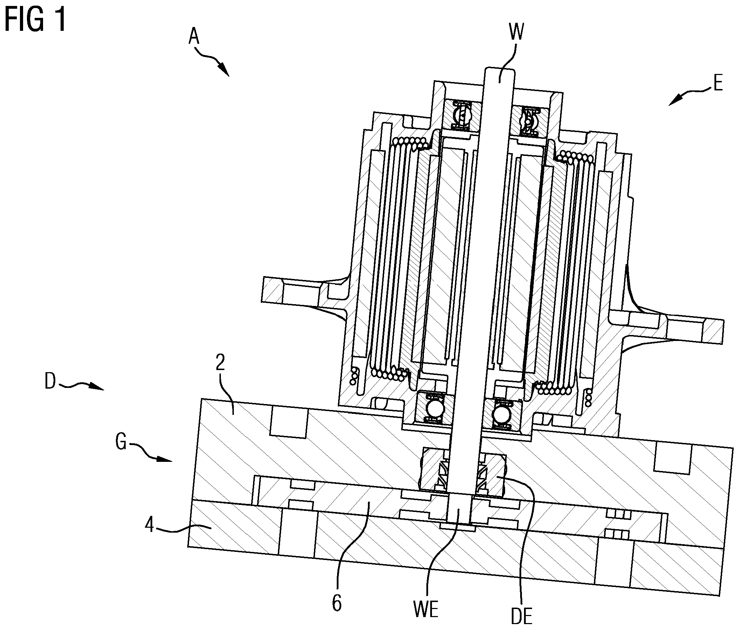

Der Aktuator A umfasst dabei eine Verteilungs- bzw. Distributionseinrichtung D mit einem bspw. im Wesentlichen zylinderförmigen Gehäuse G, welches einen ersten Gehäuseteil 2 sowie einen zweiten Gehäuseteil 4 aufweist. Diese beiden Gehäuseteile 2, 4 bilden dabei im gefügten Zustand einen Gehäuseraum aus, in welchem ein Verteiler 6 - bzw. eine Verteilscheibe 6 - drehbar verstellbar angeordnet ist (Fig. 1). Die beiden Gehäuseteile 2, 4 sowie die Verteilerscheibe 6 sind dabei z.B. aus einem duroplastischen Kunststoff oder einem thermoplastischen Kunststoff - etwa einem PPS-GF-Werkstoff - hergestellt.

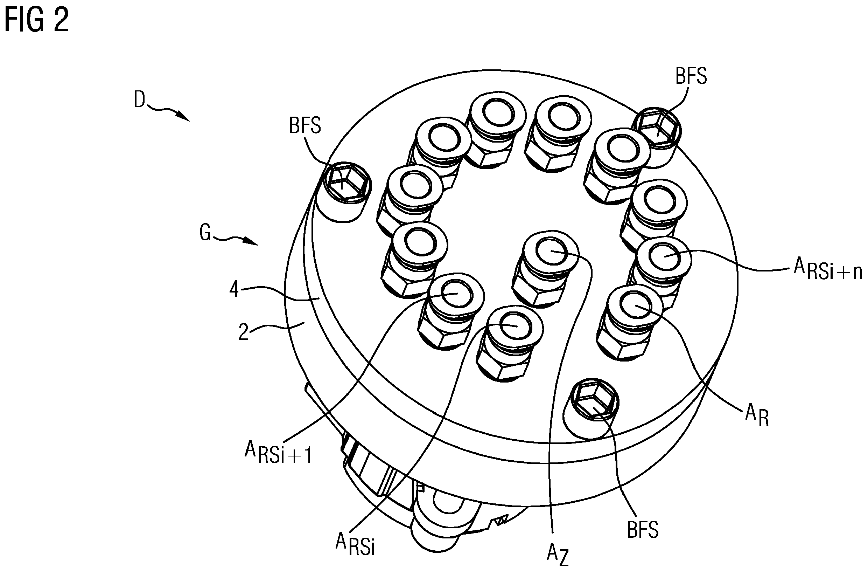

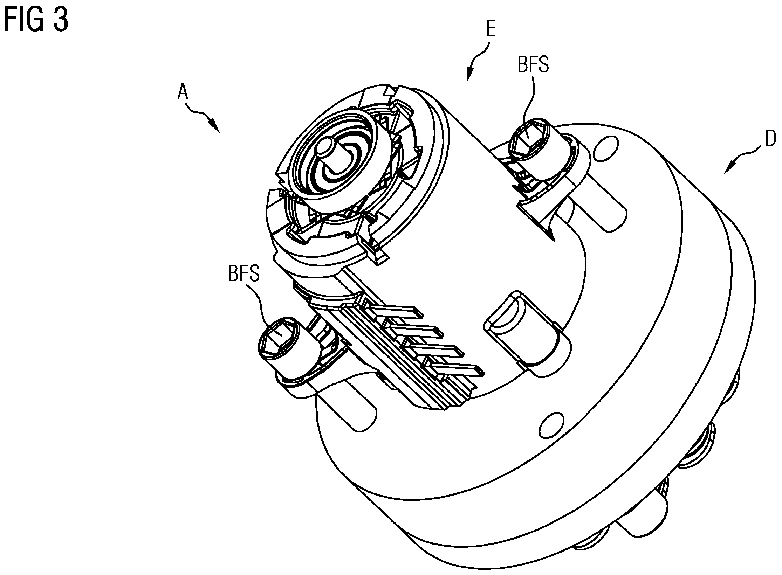

Der Aktuator A umfasst ferner einen Elektromotor bzw. E-Motor E, welcher mit dem Gehäuseteil 2 gefügt und mit den beiden Gehäuseteilen 2, 4 bspw. verschraubt ist (siehe dazu die Befestigungsschrauben BFS in Fig. 2 oder Fig. 3). Alternativ zur Verschraubung lassen sich diese Gehäuseteile 2, 4 auch bspw. miteinander verrollen, etwa mittels eines Blechmantels. Eine solche Verrollung könnte dabei bspw. auch den E-Motor E mit umfassen. Der E-Motor E ist dabei bspw. als Trockenläufer ausgebildet. Alternativ dazu kann der E-Motor E auch als Nassläufer ausgeführt sein und dabei einen Spalttopf oder ein Spaltrohr aufweisen, welcher / welches einen Nassraum von einem Trockenraum trennt und in welchem der Rotor des E-Motors E von geförderter Flüssigkeit umspült bzw. umströmt ist (Nassraum). Der Stator des E-Motors E hingegen liegt dabei im Trockenraum. Eine Welle W des E-Motors E erstreckt sich dabei durch das Gehäuseteil 2 und ein Dichtelement DE, welches im Gehäuseteil 2 angeordnet ist und dabei gegenüber dem Gehäuseteil 2 sowie der Welle W abdichtet, bis in den Verteiler 6, wobei das Wellenende WE formschlüssig in den Verteiler 6 eingreift (Fig. 1).

Fig. 2 veranschaulicht das hydraulisch-anschlussseitige Ende des Aktuators A, welches eine Vielzahl von hydraulischen Anschlüssen umfasst. Im Einzelnen umfasst dieses Ende einen Zulaufanschluss A_{Z}, mehrere Ablaufanschlüsse A_{RSi}, A_{RSi+1} ... A_{RSi+n} - entsprechend der Anzahl der besagten Reinigungsstellen RSᵢ, RSᵢ₊₁, ..., RSᵢ₊ₙ des Fahrzeugs - sowie einen weiteren Ablaufanschluss in Gestalt eines Rücklaufanschlusses A_{R}. Fig. 2 veranschaulicht dabei ferner einzelne hydraulische Anschlusselemente, die als solche bspw. in ein korrespondierendes Gewindeloch des Gehäuseteils 4 eingeschraubt sind.

Fig. 3 veranschaulicht den elektromotorischen Abschnitt des Aktuators A sowie das elektrisch-anschlussseitige Ende des Aktuators A mit elektrischen Kontakten bzw. Pins.

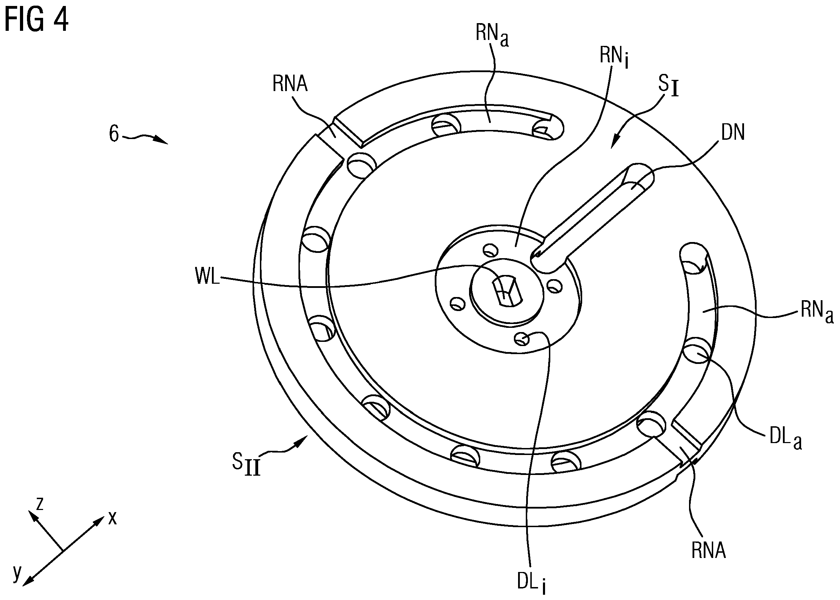

Fig. 4 veranschaulicht den zuvor genannten Verteiler 6, welcher in Gestalt einer Scheibe ausgebildet ist. Die beiden Stirnseiten S_{I}, S_{II} des Verteilers 6 sind dabei identisch, d.h. symmetrisch bzw. spiegelsymmetrisch bezüglich einer Achse Y - Y, Z - Z orthogonal zur Längsachse X - X des Verteilers 6 ausgeführt, um im Betrieb des Aktuators A ein hydrostatisches Gleichgewicht - in der Richtung X - X - am Verteiler 6 bzw. innerhalb des Gehäuses G, 2, 4 erzeugen zu können, so dass der Verteiler 6 vom Gehäuse beabstandet bleibt. Durch den Verteiler 6 erstrecken sich dabei radial innen liegende sowie radial außen liegende Durchgangslöcher DLᵢ, DLₐ, die allesamt zur Ausbildung des hydrostatischen Gleichgewichts beitragen.

Zudem sind an beiden Stirnseiten S_{I}, S_{II} Aussparungen in Gestalt von Vertiefungen ausgeformt. Eine erste innen liegende Vertiefung in Gestalt einer ersten, inneren Ringnut RNᵢ umschließt dabei das besagte Wellenloch WL, in welches das komplementär dazu ausgebildete Wellenende WE (Fig. 1) formschlüssig eingreift. In dieser Ringnut RNᵢ sind zudem bspw. vier Durchgangslöcher DLᵢ und dabei z.B. in gleichen Abständen zueinander angeordnet.

Von dieser Ringnut RNᵢ erstreckt sich eine Längsnut bzw. Radiallängsnut in Gestalt einer Durchgangsnut DN - die als solche einen Radialkanal darstellt - radial nach außen bis zwischen die beiden Enden einer außen liegenden Vertiefung in Gestalt einer zweiten, äußeren - nicht ganz bzw. nicht geschlossen umlaufenden - Ringnut RNₐ, welche die Ringnut RNᵢ zwar nicht vollständig, aber größtenteils umschließt. In dieser Ringnut RNₐ sind dabei bspw. elf Durchgangslöcher DLₐ und dabei z.B. in gleichen Abständen zueinander angeordnet.

Diese Durchgangsnut DN ist dabei in der Fig. 4 in Gestalt eines geschlossenen bzw. geschlossen umlaufenden Profils ausgeführt. D.h., sie erstreckt sich nicht bis zur radialumfangsseitigen Außenfläche der Verteilerscheibe 6.

Zudem zweigen von der Ringnut RNₐ zwei Radialnutabschnitte RNA ab, die als solche zu beiden Seiten der Durchgangsnut DN ausgebildet und um 90° zu dieser versetzt angeordnet sind (vgl. Fig. 4).

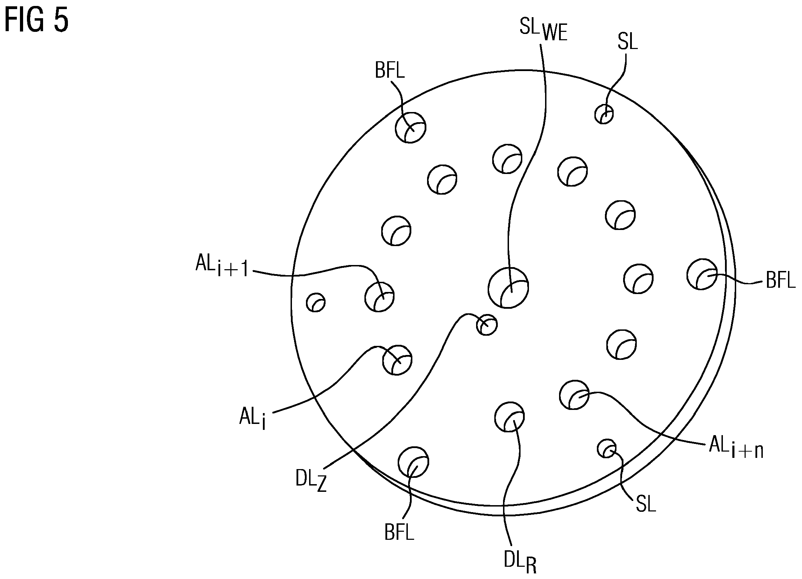

Fig. 5 veranschaulicht das Gehäuseteil 4, welches eine der Anzahl von hydraulischen Anschlüssen entsprechende Anzahl von Durchgangslöchern DL_{Z}, DL_{A}, DL_{RSi}, DL_{RSi+1}, ..., DL_{RSi+n} aufweist - in diesem Fall bspw. insgesamt elf Durchgangslöcher -, welche zudem mit einem Gewinde versehen sind, um die eingangs erwähnten hydraulischen Anschlusselemente von der gegenüber liegenden Seite bzw. Stirnseite des Gehäuseteils 2 einschrauben zu können.

Zudem sind im Gehäuseteil 4 (vgl. Fig. 5) Befestigungslöcher bzw. Durchgangslöcher BFL ausgebildet, über welche die beiden Gehäuseteile 2, 4 miteinander verschraubt sind. Dagegen ist der E-Motor - E nur mit dem Gehäuseteil 2 verschraubt (vgl. z.B. Fig. 3).

Ferner sind im Gehäuseteil 4 Verstiftungslöcher bzw. Stiftlöcher in Gestalt von bspw. Sacklöchern SL zu sehen, über welche die Gehäuseteile 2, 4 zueinander ausgerichtet und miteinander verstiftet bzw. gefügt werden.

Zudem ist in der Mitte des Gehäuseteils 4 ein Sackloch SL_{WE} ausgeformt, in welches sich das Wellenende WE erstrecken kann. Daneben findet sich das Zulaufdurchgangsloch DL_{Z}, über welches die Flüssigkeit in das Gehäuse G, 2, 4 gefördert wird.

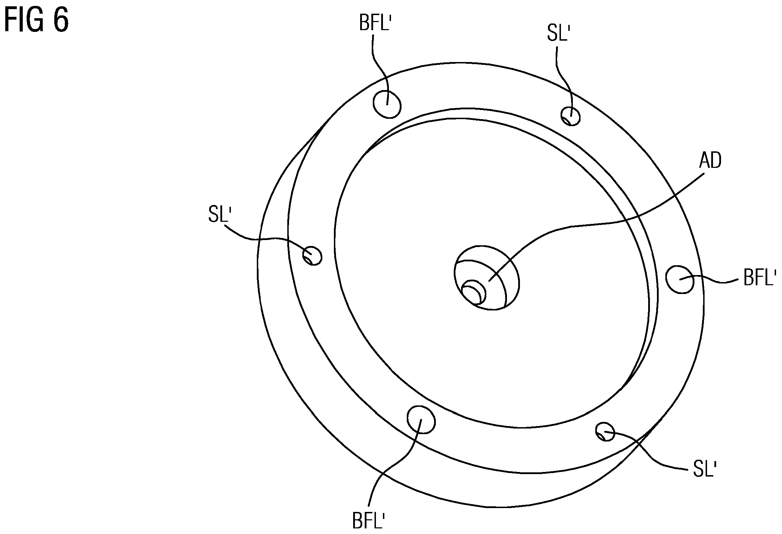

Fig. 6 veranschaulicht das Gehäuseteil 2, welches bezüglich der Befestigungslöcher BFL^{I} - etwa in Gestalt von Sacklöchern mit Innengewinde - und der Verstiftungslöcher SL^{I} - etwa in Gestalt von Sacklöchern - analog zum Gehäuseteil 4 ausgebildet ist. Zudem findet sich in der Mitte des Gehäuseteils 2 eine Aussparung AD zur Aufnahme des eingangs genannten Dichtelements DE.

Ferner können auch an den beiden Gehäuseteilen 2, 4 stirnseitig und jeweils der Verteilerscheibe 6 zugewandt Aussparungen in Gestalt von Vertiefungen ausgeformt sein, die als solche - neben den stirnseitigen Vertiefungen der Verteilerscheibe 6 - zur Ausbildung einer ausgeglichenen hydraulischen Lagerung der Verteilerscheibe 6 über ihren gesamten Verstellbereich beitragen bzw. solch eine hydraulische Lagerung sicherstellen. Diese zusätzlichen Aussparungen bzw. Vertiefungen in den Gehäuseteilen 2, 4 können dabei identisch ausgebildet bzw. ausgeformt sein und zudem einander genau gegenüber liegen.

In einer weiteren Ausführung ist entweder nur das Gehäuseteil 2 oder nur das Gehäuseteil 4 stirnseitig und jeweils der Verteilerscheibe 6 zugewandt mit zumindest einer solchen Aussparung in Gestalt einer Vertiefung ausgeführt.

In einer weiteren Ausführung ist am Gehäuseteil 2 und / oder am Gehäuseteil 4 stirnseitig und jeweils der Verteilerscheibe 6 zugewandt zusätzlich eine Nut ausgeführt, welche als solche den Radialspalt zwischen der Umfangsseite der Verteilerscheibe 6 bzw. der radialumfangsseitigen Außenfläche der Verteilerscheibe 6 und dem Gehäuse G, 2, 4 mit dem Rücklaufanschluss A_{R} fluidisch verbindet. Eine solche Nut bewirkt vorteilhafterweise einen Druckabbau in einer sog. Spülposition - bzw. Spülstellung - oder Neutralposition - bzw. Neutralstellung - der Verteilerscheibe 6, wobei die Spülposition und Neutralposition im Folgenden noch beschrieben werden.

In einer weiteren alternativen Ausführung umfasst das Gehäuse G zudem einen geschlossen umlaufenden Distanzring, welcher als solcher zwischen dem Gehäuseteil 2 und dem Gehäuseteil 4 angeordnet ist und diese beiden Gehäuseteile 2, 4 von einander beabstandet. Dieser Distanzring bildet dabei den die Verteilerscheibe 6 aufnehmenden Gehäuseraum mit aus.

Im Folgenden wird die Funktionsweise des vorgeschlagenen Verteilungsmechanismus beschrieben.

Im Betrieb des Aktuators A ist der Verteiler 6 bzw. die Verteilerscheibe 6 innerhalb des ihn / sie aufnehmenden Raums des Gehäuses G, 2, 4 von geförderter Flüssigkeit umspült bzw. umströmt.

Über den Zulaufanschluss A_{Z} und das Zulaufdurchgangsloch DL_{Z} wird die Verteilungseinrichtung D mit einer druckbeaufschlagten Flüssigkeit versorgt. Der Zulaufanschluss A_{Z} befindet sich dabei etwas außermittig am Gehäuse G, 4 und ferner auf der Höhe der innen liegenden Ringnut RNᵢ der Stirnseite S_{I} der Verteilerscheibe 6 (vgl. Fig. 4). Die Flüssigkeit trifft daher zunächst auf diese Ringnut RNᵢ auf, über welche sie sich dann über den ganzen Gehäuseraum verteilt. Dabei gelangt sie zum einen über die Durchgangslöcher DLᵢ bis auf die gegenüber liegende Stirnseite S_{II} der Verteilerscheibe 6. Über die beiden Axialspalte, welche die Verteilerscheibe 6 stirnseitig mit dem jeweils zugeordneten Gehäuseteil 2, 4 definiert ausbildet, breitet sich die Flüssigkeit über die jeweilige Stirnseite S_{I}, S_{II} aus und bildet dabei einen stirnseitigen Flüssigkeitsleckagefilm bzw. eine stirnseitige Flüssigkeitsleckageströmung, welcher / welche die Verteilerscheibe 6 vom zugeordneten Gehäuseteil 2, 4 entsprechend beabstandet.

Die Flüssigkeit gelangt dabei ferner bis in den Radialspalt zwischen der Umfangsseite der Verteilerscheibe 6 und dem Gehäuse G, 2, 4. Die beiden Radialnutabschnitte RNA begünstigen bzw. unterstützen dabei den Abfluss der Flüssigkeit aus dem Radialspalt zum besagten Rücklaufanschluss A_{R} (Fig. 2) bzw. das besagte Ablaufdurchgangsloch bzw. Rücklaufdurchgangsloch DL_{R} (Fig. 5).

Des Weiteren gelangt die Flüssigkeit bis in die Radialdurchgangsnut DN, mittels welcher die Verteilerscheibe 6 die Flüssigkeit - je nach Ausrichtung der Verteilerscheibe 6 im Gehäuseraum - zur gewünschten Stelle der Verteilungseinrichtung steuert bzw. führt.

Je nach Ausrichtung bzw. Drehverstellung der Verteilerscheibe 6 wird entweder eine der besagten Reinigungsstellen des Fahrzeugs mit Flüssigkeit versorgt, in dem einer der Ablaufanschlüsse A_{RSi}, A_{RSi+1} ... A_{RSi+n} über die Radialdurchgangsnut DN entsprechend beaufschlagt wird, oder die Flüssigkeitsversorgung gänzlich unterbunden, indem die Verteilerscheibe 6 eine sog. Spülposition bzw. Spülstellung einnimmt. Im letzteren Fall ist die Verteilerscheibe 6 derart zum Gehäuse G, 2, 4 ausgerichtet, dass die Flüssigkeit den Rücklaufanschluss A_{R} (Fig. 2) bzw. das Ablaufdurchgangsloch bzw. Rücklaufdurchgangsloch DL_{R} (Fig. 5) direkt beaufschlagt, über welchen / welches sie in einen Flüssigkeitstank rückgeführt wird, aus dem sie zuvor herausgefördert worden ist.

In dieser Spülstellung wird die geförderte Flüssigkeit in einem Kreislauf einer Reinigungsvorrichtung des Fahrzeugs umgewälzt, welcher der Flüssigkeitsverteilungsaktuator A angehört. Dabei können die Verteilungseinrichtung D sowie die Reinigungsvorrichtung gespült und/oder entlüftet werden. Dabei wird ferner im besagten Gehäuseraum ein minimales Druckniveau erzeugt.

Ferner kann auch eine weitere Position - eine sog. Neutralposition bzw. Neutralstellung - der Verteilerscheibe 6 vorgesehen sein, in welche die Verteilerscheibe 6 drehbar verstellbar ist und in welcher die Radialdurchgangsnut DN eine Stelle zwischen dem Rücklaufdurchgangsloch DL_{R} und dem Anschlussdurchgangsloch ALᵢ beaufschlagt (vgl. Fig. 5). Auch in dieser Neutralposition ist die Flüssigkeitsversorgung der einzelnen Reinigungsstellen unterbunden. Dabei wird ein gegenüber der zuvor beschriebenen Position, in welcher die Radialdurchgangsnut DN den Rücklaufanschluss A_{R} (Fig. 2) bzw. das Ablaufdurchgangsloch bzw. Rücklaufdurchgangsloch DL_{R} (Fig. 5) direkt beaufschlagt, höheres bzw. maximales Druckniveau im Gehäuseraum erzeugt.

In dieser Neutralposition - bzw. auch Sperrstellung genannt - der Verteilerscheibe 6 verbleiben alle zu einer Reinigungsstelle führenden Ablaufanschlüsse A_{RSi}, A_{RSi+1} ... A_{RSi+n} - bis auf den Rücklaufanschluss A_{R} - verschlossen. Dies erreicht man, indem jedem dieser Ablaufanschlüsse A_{RSi}, A_{RSi+1} ... A_{RSi+n} ein entsprechendes - nicht dargestelltes - Sperrventil zugeordnet wird, welches erst ab einem bestimmten Flüssigkeitsdruck öffnet. Über den Rücklaufanschluss A_{R} wird dabei nur die sich in dieser Neutralposition einstellende Flüssigkeitsleckage abgeführt bzw. dem Flüssigkeitstank rückgeführt.

Diese beiden sich unterscheidenden Druckniveaus können dabei zu Diagnosezwecken verwendet werden.

Der Druck bzw. das Druckniveau im Gehäuseraum liegt dabei bspw. bei ca. 3 bis 8bar.

Mit der Bestimmung der Position bzw. der Lage des Rotors des E-Motors E in Umfangsrichtung ΔΦ lässt sich auch die besagte Relativposition der Radialdurchgangsnut DN zu den einzelnen Stellen des Gehäuses bestimmen.

Die besagte Position bzw. Lage des Rotors liefert dabei zumindest ein im und/oder am E-Motor E verbauter Sensor, beispielsweise ein Hallsensor. Zusätzlich oder alternativ dazu lassen sich auch direkt eine Strom- und Spannungsinformation aus dem E-Motor E zur Bestimmung der Rotorposition bzw. Rotorlage verwenden.

Unabhängig von der Position der Verteilerscheibe 6 wird die sich im Gehäuseraum an den beiden Axialspalten sowie im Radialspalt einstellende Flüssigkeitsleckage - zumindest ab einem bestimmten Mindestdruckniveau im Gehäuseraum - über das Rücklaufdurchgangsloch DL_{R} (vgl. Fig. 5) und den Rücklaufanschluss A_{R} (vgl. Fig. 2) in den Flüssigkeitstank rückgeführt (Flüssigkeitsrücklauf). Dazu trägt auch der Umstand bei, dass das Rücklaufdurchgangsloch DL_{R} (vgl. Fig. 5) und der Rücklaufanschluss A_{R} (vgl. Fig. 2) auf der Höhe der Ringnut RNₐ liegen.

Der vorgeschlagene Verteilungsmechanismus zeichnet sich im Betrieb durch minimale stirnseitige Axialspalte aus, welche als solche eine Flüssigkeitsleckage im Gehäuseraum minimieren.

Die sich einstellenden Axialspalte liegen dabei vorteilhafterweise im Bereich von bis zu ca. 10µm. D.h., in der Summe beträgt der Axialspalt zwischen der Verteilerscheibe 6 und dem Gehäuse G, 2, 4 bis zu höchstens ca. 20µm.

Das durch diese minimalen Axialspalte reduzierte Flüssigkeitsvolumen im Gehäuseraum begünstigt dabei ferner eine hohe Einfriersicherheit der Verteilungseinrichtung D.

Die symmetrische bzw. zumindest im Wesentlichen symmetrische Verteilerscheibe 6 zeichnet sich dabei außerdem dadurch aus, dass sie nahezu kraftfrei drehbar verstellbar ist und zudem ein geringes Trägheitsmoment aufweist. Dies geht vorteilhafterweise mit einem relativ geringen Energiebedarf sowie sehr kurzen Umschaltzeiten für die Drehverstellung der Verteilerscheibe 6 einher.

Im durch die Figuren veranschaulichten Ausführungsbeispiel ist die Antriebswelle W des E-Motors E mittels eines gehäuseseitigen Festlagers und eines davon beabstandeten Loslagers - die bspw. jeweils in Gestalt eines Rollenkugellagers ausgebildet sein können - aufgenommen bzw. gelagert.

Alternativ dazu ließe sich aber auch eine Wellenaufnahme bzw. Wellenlagerung vorsehen, nach welcher das gehäuseseitige Wellenende WE gegen das Gehäuseteil 4 bzw. eine im Gehäuseteil 4 angeordnete Kugel drückt und dabei im Betrieb der Verteilungseinrichtung ein hydrodynamisches Lager bildet.

In einer weiteren Ausführungsform kann das Gehäuse G, 2, 4 selbst einen Teil einer Antriebseinheit bzw. eines E-Motor E bilden. Dabei kann die Verteilerscheibe 6 aus einem magnetischen Material ausgeführt sein. Zumindest ein die Verteilerscheibe 6 umschließendes Gehäuseteil bildet dabei den Stator des E-Motors in Gestalt eines bspw. Synchron- oder Reluktanzmotors.

Dadurch ließe sich der Aktuator A mit dem zuvor beschriebenen Verteilungsmechanismus noch kompakter ausführen.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Verteilungseinrichtung (D) zur Versorgung einzelner Reinigungsstellen (RS = Reinigungsstelle; RSᵢ, RSᵢ₊₁, ..., RSᵢ₊ₙ) eines Fahrzeugs mit einer druckbeaufschlagten Flüssigkeit,
wobei die Verteilungseinrichtung (D) ein Gehäuse (G, 2, 4) mit einem Zulaufanschluss (A_{Z}), mehreren Ablaufanschlüssen (A_{RSi}, A_{RSi+1} ... A_{RSi+n}) für die einzelnen Reinigungsstellen (RSᵢ, RSᵢ₊₁,... , RSᵢ₊ₙ) und einem Rücklaufanschluss (A_{R}) aufweist sowie einen darin angeordneten, elektromotorisch antreibbaren, drehbar verstellbaren Verteiler (6) in Gestalt einer Scheibe, in welcher Flüssigkeitsaufnahme- und Flüssigkeitsführungsmittel ausgeformt sind, wobei der Verteiler (6) in definierte Positionen relativ zum Gehäuse (G, 2, 4) drehbar verstellbar ist, um die Flüssigkeitsversorgung zu ermöglichen oder zu unterbinden,
wobei die Scheibe (6) über ein stirnseitiges (S_{I}, S_{II}) Flüssigkeitsaufnahme- und Flüssigkeitsführungsmittel in Gestalt einer Radialnut die Flüssigkeit zu den gewünschten Stellen der Verteilungseinrichtung steuert,
wobei die Scheibe (6) Druckausgleichsmittel in Gestalt von Durchgangslöchern (DLᵢ, DLₐ) aufweist.

2. Verteilungseinrichtung nach Anspruch 1, wobei ein im Betrieb der Verteilungseinrichtung (D) zwischen der Scheibe (6) und dem Gehäuse (G, 2, 4) von geförderter Flüssigkeit gefüllter, zusammenhängender Raum mit dem Rücklaufanschluss (A_{R}) fluidisch verbunden ist.

3. Verteilungseinrichtung nach Anspruch 2, wobei die Scheibe (6) stirnseitig mit dem jeweils zugeordneten Gehäuseabschnitt (2, 4) einen definierten Axialspalt ausbildet, über welchen sich geförderte Flüssigkeit im Gehäuse (G, 2, 4) ausbreitet und dabei stirnseitig (S_{I}, S_{II}) einen Flüssigkeitsleckagefilm bildet, welcher den Verteiler (6) vom Gehäuse (2, 4) beabstandet.

4. Verteilungseinrichtung nach einem der vorhergehenden Ansprüche, wobei die Scheibe (6) bezüglich einer Achse orthogonal zur Längsachse (X - X) der Scheibe symmetrisch ausgebildet ist.

5. Flüssigkeitsverteilungsaktuator umfassend:
eine Verteilungseinrichtung (D = Distributionseinrichtung) nach einem der vorhergehenden Ansprüche sowie
einen Elektromotor (E) zum Antrieb des drehbaren verstellbaren Verteilers (6) der Verteilungseinrichtung (D).

6. Reinigungsvorrichtung für ein Fahrzeug zur Reinigung einer Vielzahl von Reinigungsstellen am Fahrzeug, wobei die Reinigungsvorrichtung zumindest einen Flüssigkeitsverteilungsaktuator nach Anspruch 5 aufweist.

7. Fahrzeug mit einer Reinigungsvorrichtung nach Anspruch 6.

## Claims

1. Distributing device (D) for supplying a pressurized liquid to individual cleaning locations (RS = cleaning location; RSᵢ, RSᵢ₊₁, ..., RSᵢ₊ₙ) of a vehicle,
wherein the distributing device (D) has a housing (G, 2, 4) having an inlet connection (A_{Z}), a plurality of outlet connections (A_{RSi}, A_{RSi+1} ... A_{RSi+n}) for the individual cleaning locations (RSᵢ, RSᵢ₊₁, ..., RSᵢ₊ₙ) and a return connection (A_{R}) , and an electromotively drivable, rotatably adjustable distributor (6) which is arranged therein and which is in the form of a disc, in which liquid receiving means and liquid guiding means are formed, wherein the distributor (6) is rotatably adjustable relative to the housing (G, 2, 4) in defined positions in order to allow or to prevent the supply of liquid,
wherein the disc (6) controls the liquid to the desired locations of the distributing device via a liquid receiving means and liquid guiding means at the front side (S_{I}, S_{II}) in the form of a radial groove,
wherein the disc (6) has pressure equalization means in the form of through-holes (DLᵢ, DLₐ).

2. Distributing device according to Claim 1, wherein a coherent space which is filled by conveyed liquid during operation of the distributing device (D) between the disc (6) and the housing (G, 2, 4) is fluidically connected to the return connection (A_{R}).

3. Distributing device according to Claim 2, wherein the disc (6) forms, at the front side with the associated housing portion (2, 4), a defined axial gap, via which conveyed liquid propagates in the housing (G, 2, 4) and in this instance forms at the front side (S_{I}, S_{II}) a liquid leakage film which spaces the distributor (6) apart from the housing (2, 4).

4. Distributing device according to one of the preceding claims, wherein the disc (6) is formed symmetrically with respect to an axis orthogonal to the longitudinal axis (X-X) of the disc.

5. Liquid-distributing actuator comprising:
a distributing device (D = distributing device) according to one of the preceding claims and
an electric motor (E) for driving the rotatably adjustable distributor (6) of the distributing device (D) .

6. Cleaning apparatus for a vehicle for cleaning a large number of cleaning locations on the vehicle, wherein the cleaning apparatus comprises at least one liquid-distributing actuator according to Claim 5.

7. Vehicle having a cleaning apparatus according to Claim 6.

## Revendications

1. Dispositif de distribution (D) pour l'alimentation en liquide sous pression de différents points de nettoyage (RS = point de nettoyage ; RSᵢ, RSᵢ₊₁, ..., RSᵢ₊ₙ) d'un véhicule,
le dispositif de distribution (D) comportant un boîtier (G, 2, 4) doté d'un orifice d'entrée (a_{Z}), d'une pluralité d'orifices de sortie (A_{RSi}, A_{RSi+1} ... A_{RSi+n}) pour les différents points de nettoyage (RSᵢ, RSᵢ₊₁,... , RSᵢ₊ₙ) et d'un raccord de retour (A_{R}), ainsi qu'un distributeur réglable en rotation (6) disposé dans celui-ci, en forme de disque et pouvant être entraîné par un moteur électrique, dans lequel sont formés des moyens d'absorption et d'acheminement de liquide, le distributeur (6) étant réglable en rotation dans des positions définies par rapport au boîtier (G, 2, 4) pour permettre ou empêcher l'alimentation en liquide,
le disque (6) dirigeant le liquide vers les points souhaités du dispositif de distribution par l'intermédiaire d'un moyen de réception et de guidage de liquide, côté frontal (S_{I}, S_{II}), sous la forme d'une rainure radiale,
le disque (6)comportant des moyens de compensation de pression sous forme de trous traversants (DLᵢ, DLₐ).

2. Dispositif de distribution selon la revendication 1, **caractérisé en ce qu'**un espace cohésif rempli du liquide transporté pendant le fonctionnement du dispositif de distribution (D) entre le disque (6) et le boîtier (G, 2, 4) est en communication fluidique avec le raccord de retour (A_{R}).

3. Dispositif de distribution selon la revendication 2, **caractérisé en ce que** le disque (6) forme, côté frontal, avec la partie de boîtier (2, 4) associée, un interstice axial défini par l'intermédiaire duquel le liquide transporté se propage dans le boîtier (G, 2, 4) et forme, côté frontal (S_{I}, S_{II}), un film de fuite de liquide, qui espace le distributeur (6) du boîtier (2, 4).

4. Dispositif de distribution selon l'une des revendications précédentes, **caractérisé en ce que** le disque (6) est formé symétriquement par rapport à un axe orthogonal à l'axe longitudinal (X - X) du disque.

5. Actionneur de distribution de liquide comprenant :
un dispositif de distribution (D = dispositif de distribution) selon l'une des revendications précédentes et
un moteur électrique (E) destiné à entraîner le distributeur réglable en rotation (6) du dispositif de distribution (D).

6. Dispositif de nettoyage destiné à un véhicule pour nettoyer une pluralité de points de nettoyage sur le véhicule, le dispositif de nettoyage comportant au moins un actionneur de distribution de liquide selon la revendication 5.

7. Véhicule comprenant un dispositif de nettoyage selon la revendication 6.
